# DEMANDE DE BREVET EUROPEEN

(11) **EP 4 400 928 A1**
(43) Date de publication de la demande: **17.07.2024**
(21) Numéro de dépôt: 24151452.0
(22) Date de dépôt: 11.01.2024
(51) Int. Cl.: G05B 19/42, B21D 3/10, B21K 3/04, B23P 6/00, G06T 7/00, B21D 11/14

(54) **PROCÉDÉ DE MISE EN FORME D'UNE PIÈCE D'ÉQUIPEMENT COMPRENANT UNE PALE**

(30) Priorité: 12.01.2023 FR 2300320
(71) Demandeur: LISI Aerospace, 75012 Paris (FR); LISI Aerospace Forged Integrated Solution, 52310 Bologne (FR)
(72) Inventeur: MEIFFRE, Loïc, 78700 Conflans Sainte Honorine (FR); BAIZEAU, Thomas, 52000 Chaumont (FR); APSHANKAR, Sagar, 75012 Paris (FR)
(74) Mandataire: Lavoix

(57) **Abrégé**

La présente invention concerne un procédé de mise en forme d'une pièce (12) d'équipement de type aube de turbine, comprenant les étapes suivantes :
- fourniture d'une pièce (12) comprenant une pale (14) dans une conformation initiale ;
- fourniture d'une définition nominale représentant la pièce dans une conformation nominale ;
- comparaison de la conformation initiale à la définition nominale afin de déterminer un caractère conforme ou non-conforme;
- pour une donnée non-conforme, détermination d'un effort à appliquer sur la pièce pour déformer ladite pièce;
- application de l'effort de sorte à obtenir la pièce dans une conformation déformée,
- comparaison de la conformation déformée à la définition nominale afin de déterminer un caractère conforme ou non-conforme ;
- entraînement d'un algorithme (82) auto-apprenant.

## Description

La présente invention concerne un procédé de mise en forme d'une pièce d'équipement comprenant une pale. L'invention s'applique particulièrement aux aubes de turbine ou de compresseur statique (variable ou non) ou rotorique comprenant une pale.

Une pale d'aube a typiquement la forme d'une aile vrillée, dont le profil aérodynamique est destiné à optimiser un écoulement de fluide et à le compresser.

Les procédés classiques de fabrication des aubes par usinage, forgeage ou extrusion ne permettent pas toujours d'obtenir le vrillage ou la flèche requis. Il est donc connu de soumettre des pales à un procédé de redressage, visant à faire entrer la forme de la pale dans les intervalles de tolérance autour du profil nominal. Un tel procédé est notamment décrit dans le document EP1494003.

La présente invention a pour but de proposer un procédé permettant l'automatisation du redressage des pales, ainsi qu'une amélioration continue du résultat par apprentissage automatique.

A cet effet, l'invention a pour objet un procédé de mise en forme du type précité, comprenant les étapes suivantes :
- fourniture d'une pièce comprenant une pale dans une conformation initiale, ladite pale s'étendant selon un axe, et comprenant au moins une première zone de préhension disposée à une extrémité axiale de la pale ;
- fourniture d'une définition nominale représentant la pièce dans une conformation nominale, ladite définition nominale comprenant un ensemble de dimensions nominales et de tolérances associées ;
- acquisition tridimensionnelle d'un premier ensemble de données représentant la pièce dans la conformation initiale ;
- comparaison du premier ensemble de données à la définition nominale afin de déterminer un caractère conforme ou non-conforme d'au moins une donnée du premier ensemble de données ;
- pour une donnée non-conforme, détermination par un algorithme auto-apprenant entraîné sur une pluralité de pièces de même type d'un effort à appliquer sur la pièce pour déformer ladite pièce avec une probabilité suffisante pour qu'au moins la donnée non-conforme soit déterminée ultérieurement comme étant conforme;
- application de l'effort déterminé à l'étape précédente sur la pièce de sorte à obtenir la pièce dans une conformation déformée,
- acquisition tridimensionnelle d'un deuxième ensemble de données de la pièce dans la conformation déformée, ;
- comparaison du deuxième ensemble de données à la définition nominale afin de déterminer un caractère conforme ou non-conforme d'au moins une donnée du deuxième ensemble de données ;
- mesure et enregistrement de paramètres du premier effort appliqué, des premier et deuxième ensembles de données ainsi que des caractères de conformité et de non-conformité déterminés lors des étapes de comparaison ; et
- entraînement de l'algorithme auto-apprenant sur la base des mesures et enregistrements de l'étape précédente.

Suivant d'autres aspects avantageux de l'invention, le procédé comporte l'une ou plusieurs des caractéristiques suivantes, prises isolément ou suivant toutes les combinaisons techniquement possibles :
- l'effort est choisi entre : un effort en flexion, perpendiculairement à l'axe de la pale; un couple de torsion autour dudit axe de pale ; et un effort combiné de flexion et de torsion ;
- au moins une acquisition tridimensionnelle est réalisée au moyen d'un équipement à mesurer avec ou sans contact ;
- chacun de la définition nominale, du premier et du deuxième ensemble de données comprend au moins une donnée parmi : un ensemble de dimensions d'une section de la pâle, un angle de vrillage, une épaisseur d'un bord d'attaque de la pale, une épaisseur d'un bord de fuite de la pale, une position d'un point clé sur une surface extérieure de la pièce, ou une combinaison de n'importe lesquelles de ces données ;
- au cours de l'application de l'effort sur la pale, une préhension est exercée au moins sur la première zone de préhension ;
- au cours de l'application de l'effort sur la pale, une deuxième zone de préhension de la pièce est maintenue fixe par rapport à un bâti ;
- l'effort est un effort en flexion, perpendiculairement à l'axe de la pale ; ledit effort en flexion étant appliqué en exerçant un appui sur une zone d'appui de la pale, ladite zone d'appui étant disposée entre la première et la deuxième zone de préhension de ladite pièce ;
- l'effort est un couple de torsion autour de l'axe de pale ; l'un des éléments de préhension et de la deuxième portion de la pièce est maintenu fixe par rapport à un bâti (30) ; et l'effort de torsion est appliqué en faisant pivoter, par rapport au bâti, l'autre desdits premières et deuxième zone de préhension ;
- l'effort est un couple de torsion autour de l'axe de pale ; et l'effort de torsion est appliqué en faisant pivoter, l'un par rapport à l'autre, la première et la deuxième zones de préhension ;
- la pièce comprend en outre un identifiant, le procédé comprenant en outre les étapes de : lecture de l'identifiant ; identification de la définition nominale correspondant à la pièce d'équipement parmi une pluralité de définitions nominales ; et identification de l'algorithme auto-apprenant correspondant à la pièce d'équipement parmi une pluralité d'algorithmes auto-apprenants.

L'invention se rapporte en outre à un ensemble pour la mise en oeuvre d'un procédé tel que décrit ci-dessus, comprenant : un dispositif de mesure, apte à acquérir des données tridimensionnelles de la pièce, dans la conformation initiale et/ou dans la conformation déformée ; une installation apte à appliquer l'effort sur la pièce; et un dispositif électronique comprenant une mémoire de données et au moins un algorithme auto-apprenant entraîné sur une pluralité de pièces de même type que la pièce, ledit dispositif de mesure, l'installation et le dispositif électronique étant reliés par au moins un canal de communication.

L'invention sera mieux comprise à la lecture de la description qui va suivre, donnée uniquement à titre d'exemple non limitatif et faite en se référant aux dessins sur lesquels :
[Fig 1] la figure 1 est une vue schématique, de dessus, d'une installation et d'un ensemble pour la mise en oeuvre d'un procédé de mise en forme selon un mode de réalisation de l'invention ;
[Fig 2] [Fig 3] les figures 2 et 3 sont des vues schématiques partielles de l'installation de la figure 1 ;
[Fig 4] la figure 4 est un logigramme d'un procédé de mise en forme selon un mode de réalisation de l'invention ; et
[Fig 5] la figure 5 est un logigramme d'un procédé d'apprentissage pour un procédé de mise en forme selon un mode de réalisation de l'invention.

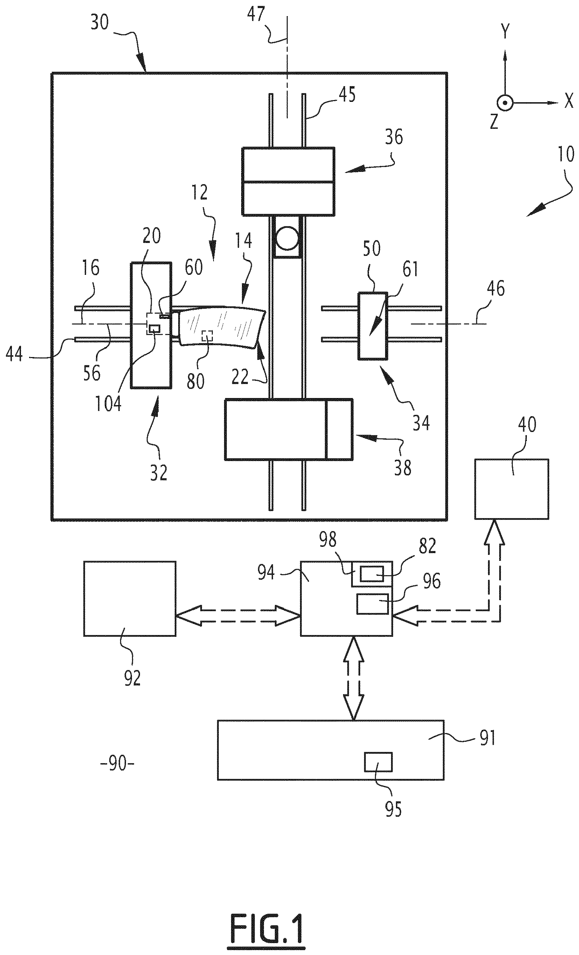

La figure 1 représente une installation 10 de mise en oeuvre d'un procédé de fabrication d'une pièce 12 d'équipement.

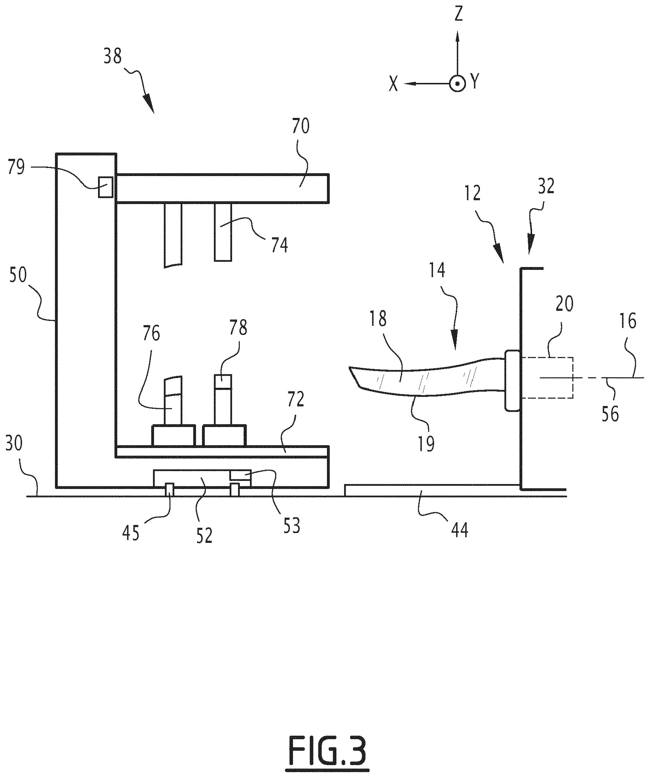

La pièce 12, visible sur les figures 1 et 3, est notamment de type aube de turbine ou de compresseur. En particulier, la pièce 12 comporte une pale 14 métallique, s'étendant selon un axe 16 principal.

La pale 14 comprend une surface courbe. En particulier, la pale 14 comporte deux faces 18, 19 courbes opposées, chacune desdites faces s'étendant sensiblement selon l'axe 16.

Dans le mode de réalisation représenté, la pièce 12 comprend en outre une première zone 20 de préhension, disposée à une première extrémité axiale de la pale 14, sous la forme d'un pied d'aube. Le pied 20 et la pale 14 sont formés de manière monobloc dans un matériau métallique tel qu'un alliage de base fer, titane, aluminium, cuivre ou nickel, ou dans un matériau plastique, ou encore sont formés de manière composite dans un matériau métallique et dans une matière plastique.

Dans une variante non représentée, la pièce 12 comprend en outre un talon, disposé à une seconde extrémité axiale 22 de la pale 14, opposée au pied 20.

L'installation 10 est destinée à réaliser une opération de redressage de la pale 14 de la pièce 12 afin de lui conférer une forme finale souhaitée, en cas d'écart trop important entre cette forme souhaitée - conforme à une définition de l'aube - et la forme de la pale réelle issue des procédés de fabrication standard, par exemple forge, extrusion ou usinage.

L'installation 10 comporte un bâti 30 fixe et au moins deux unités 32, 34, 36, 38 mobiles, aptes à exercer un effort sur la pale 14 afin de la déformer. Dans le mode de réalisation représenté, les unités mobiles comportent : une unité 32 de préhension ; une unité 34 de support ; une unité 36 de flexion ; et une unité 38 de torsion.

L'installation 10 comporte en outre un module électronique 40, ledit module comprenant notamment un microprocesseur. De préférence, le module électronique 40 comprend également : un module de conversion de données analogiques - issues des capteurs - en données numériques ; un algorithme de prétraitement des données, notamment pour supprimer les données aberrantes et uniformiser les données numériques pour leur traitement ultérieur par un programme ; et éventuellement un affichage ou un émetteur sonore.

On considère une base orthonormée (X, Y, Z) associée au bâti 30, la direction Z représentant la verticale.

Le bâti 30 comporte : une surface supérieure s'étendant dans un plan (X, Y) ; et des moyens 44, 45 de guidage des unités de préhension, de support, de flexion et de torsion sur ladite surface supérieure.

Les moyens 44, 45 de guidage sont par exemple des rails. Dans le mode de réalisation représenté, des premiers rails 44 sont disposés selon un premier axe 46 parallèle à X et des deuxièmes rails 45 sont disposés selon un deuxième axe 47 parallèle à Y.

Chacune des unités de préhension, de support, de flexion et de torsion comporte : une structure 50 ; et un moyen 52 de déplacement motorisé de ladite structure, le long d'au moins l'un des moyens 44, 45 de guidage du bâti 30.

Plus précisément, dans le mode de réalisation représenté, les structures 50 de l'unité 32 de préhension et de l'unité 34 de support sont aptes à se déplacer selon X, le long des premiers rails 44 ; et les structures 50 de l'unité 36 de flexion et de l'unité 38 de torsion sont aptes à se déplacer selon Y, le long des deuxième rails 45. Dans une variante non représentée, au moins une unité mobile de l'installation 10 est apte à se déplacer selon deux directions dans un plan (X, Y).

De préférence, les moyens 52 de déplacement motorisé des unités sont commandés par le module électronique 40 ; et chacun des moyens 52 est couplé à un capteur 53 d'une position de l'unité correspondante sur le bâti 30. Chaque capteur 53 de position est relié au module électronique 40. Les liaisons entre le module électronique 40 et les moyens 52 de déplacement et chaque capteur 53 sont de préférence filaires.

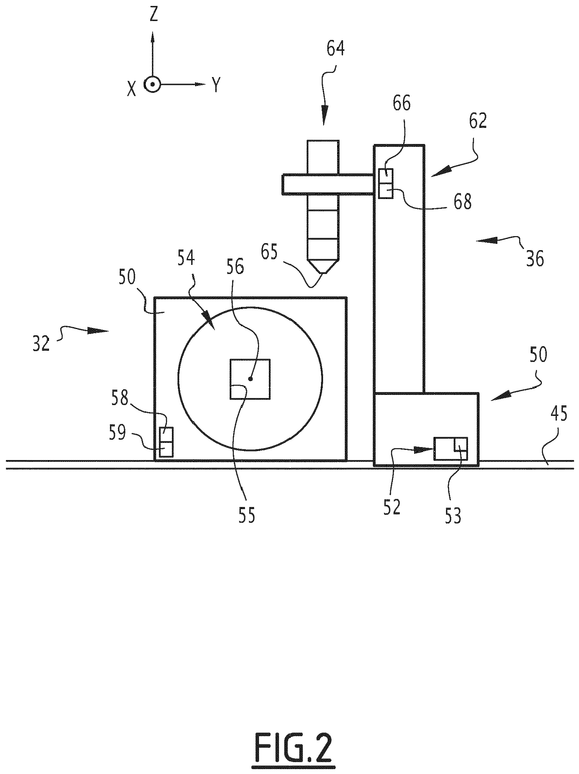

L'unité 32 de préhension, plus précisément visible sur la figure 2, va maintenant être décrite. Outre sa structure 50, l'unité 32 de préhension comporte un organe 54 rotatif de préhension.

L'organe 54 est apte à exercer une préhension sur la pièce 12, en particulier sur le pied 20, de sorte à maintenir fixe ledit pied par rapport audit organe 54. En particulier, l'organe 54 comporte un logement 55 (figure 2), apte à accueillir et à maintenir le pied 20.

En outre, l'organe 54 est rotatif par rapport à la structure 50 de l'unité 32, selon un troisième axe 56 parallèle à X. Le logement 55 s'étend de préférence selon le troisième axe 56.

Plus précisément, en coopération avec l'unité 38 de torsion, l'organe 54 rotatif est apte à appliquer un couple de torsion à la pièce 12, comme il sera détaillé ci-après.

L'unité 32 de préhension comporte en outre : un capteur 58 de position angulaire de l'organe 54 par rapport à la structure 50 ; et un capteur 59 de couple exercé par un déplacement angulaire dudit organe par rapport à ladite structure, ce couple pourra être appliqué à la pièce dans les deux directions horaire et anti-horaire.

Selon un mode de réalisation, l'unité 32 de préhension comprend un dispositif de détection d'un repère 60 (figure 1) disposé sur la pièce 12, par exemple sur le pied 20. Ainsi, lorsque la pièce 12 est assemblée au logement 55, une position angulaire de la pièce 12 est associée à la position angulaire de l'organe 54, détectée par le capteur 58.

De préférence, l'organe 54 et les capteurs 58, 59 sont reliés au module électronique 40 par une liaison filaire.

L'unité 34 de support comprend une surface 61 supérieure. Ladite surface supérieure est apte à être disposée sous une deuxième zone de préhension de la pièce 12.

De préférence, la surface 61 supérieure de l'unité 34 de support présente une forme apte à une mise en contact avec ladite deuxième zone de préhension de la pièce 12. La deuxième zone de préhension peut être formée par le talon, ou une portion de pale à distance axiale du pied et du talon.

Plus précisément, dans le mode de réalisation représenté, la surface 61 supérieure de l'unité 34 présente une forme apte à une mise en contact avec le talon, et présente de préférence une forme complémentaire de celle du talon.

De manière optionnelle, l'unité 34 de support comporte en outre des moyens (non représentés) de réglage d'une hauteur selon Z de la surface supérieure 61 par rapport à sa structure 50. Lesdits moyens sont reliés au module électronique 40.

L'unité 36 de flexion, plus précisément visible sur la figure 2, va maintenant être décrite. Outre sa structure 50, l'unité 36 de flexion comporte une presse 62. En particulier, la presse 62 comporte une tête 64 d'application, mobile selon Z par rapport à la structure 50 de l'unité 36 de flexion. La tête 64 d'application est apte à exercer un effort vertical vers le bas sur la pièce 12, plus précisément sur une zone précise de la pale 14, comme il sera décrit ci-après. Une extrémité de la tête 64 comporte notamment une surface d'appui 65, destinée à entrer en contact avec la pale 14 ou le talon.

L'unité 36 de flexion comporte en outre : un capteur 66 de course de la tête 64 selon Z ; et un capteur 68 d'effort exercé par ou sur ladite tête.

De préférence, la presse 62 et les capteurs 66, 68 sont reliés au module électronique 40 par liaison filaire.

L'unité 38 de torsion, plus précisément visible sur la figure 3, va maintenant être décrite. Outre sa structure 50, l'unité 38 de torsion comprend une bride supérieure 70 et une bride inférieure 72. Au moins l'une des brides supérieure 70 et inférieure 72 est mobile selon Z par rapport à la structure 50 de l'unité 38. De manière optionnelle, chacune des brides supérieure 70 et inférieure 72 est mobile selon Z par rapport à ladite structure 50.

Selon un mode de réalisation, au moins l'une des brides supérieure 70 et inférieure 72 est également mobile suivant l'axe X par rapport à la structure 50.

Chacune des brides supérieure 70 et inférieure 72 comporte au moins un doigt 74, 76. Les brides supérieure 70 et inférieure 72 sont configurées de manière à prendre en tenaille la deuxième zone de préhension 22 de la pièce 12 entre les doigts 74, 76. De préférence, l'extrémité de chaque doigt 74, 76 comporte une surface 78 configurée pour la mise en contact avec la deuxième zone de préhension. Dans un mode de réalisation non représenté, les surfaces 78 sont configurées pour une mise en contact avec le talon.

Dans le mode de réalisation représenté, chacune des brides supérieure 70 et inférieure 72 comporte deux doigts 74, 76, chaque doigt 74 de la bride supérieure étant disposé à la verticale d'un doigt 76 de la bride inférieure.

De préférence, l'unité 38 de torsion comporte en outre un capteur 79 d'effort exercé par ou sur la bride supérieure et/ou la bride inférieure.

De préférence, la bride supérieure 70 et/ou la bride inférieure 72 et/ou le capteur 79 sont reliés au module électronique 40 par liaison filaire.

Une première opération d'un procédé de mise en forme de la pièce 12 va maintenant être décrite. Ladite première opération, dite opération de défléchage, se déroule comme suit :
On considère initialement que le pied 20 est assemblé au logement 55 de l'organe 54 de l'unité 32 de préhension, de sorte que l'axe 16 de la pièce et le troisième axe 56 de rotation de l'organe 54 soient confondus, comme représenté sur les figures 1 et 3.

Tout d'abord, une zone d'appui 80 sur la pale 14 est déterminée par un algorithme 82 auto-apprenant. Ledit algorithme 82 est mémorisé dans le module électronique 40, ou encore dans un dispositif de commande 94, comme il sera décrit ultérieurement.

La zone d'appui 80 présente par exemple des dimensions similaires à la surface d'appui 65 de la tête d'application 64 de l'unité 36 de flexion.

Sur la base de l'emplacement de la zone d'appui 80 sur la pale 14, l'algorithme 82 détermine alors : une position angulaire de l'organe 54 par rapport à la structure correspondante de l'unité 32 de préhension ; une position selon X de ladite unité 32 de préhension ; et une position selon Y de l'unité 36 de flexion. Lesdites positions sont configurées pour permettre à la tête 64 d'application d'entrer en contact avec la zone d'appui 80 au cours d'un déplacement vertical vers le bas de ladite tête.

L'algorithme 82 détermine également une position selon X de l'unité 34 de support, de sorte que la surface 61 supérieure soit au contact de la pièce 12 durant le déplacement vertical de la tête 64 d'application. La position de l'unité 34 de support est notamment choisie de sorte que, durant son déplacement vertical, la tête 64 soit disposée selon X entre l'unité 32 de préhension et l'unité 34 de support.

Sur la base des positions déterminées ci-dessus, les moyens de déplacement 52 sont actionnés par le module électronique 40 pour disposer les unités 32 de préhension, 34 de support et 36 de flexion aux emplacements correspondants sur le bâti 30 ; et l'organe 54 est placé dans la position angulaire correspondante.

Puis, la presse 62 est actionnée par le module électronique 40, de sorte à déplacer vers le bas la tête 64 d'application. La surface 65 d'appui entre ainsi en contact avec la zone d'appui 80. Le déplacement vers le bas de la tête 64 est poursuivi de sorte à appliquer un effort sur la zone d'appui 80. La pièce 12, soutenue axialement de part et d'autre de ladite zone d'appui, subit une première déformation en flexion, dite défléchage, perpendiculairement à l'axe 16 principal.

La course de la tête 64, depuis la mise en contact avec la pièce 12, est détectée par le capteur 66 de course et le capteur d'effort, pour détecter le contact. De même, l'effort exercé entre la tête 64 et la pièce 12 est détectée par le capteur 68 d'effort.

Lorsqu'une course et/ou un effort souhaité, déterminé par l'algorithme 82, est atteint, le déplacement vers le bas de la tête 64 est arrêté. La position de la zone d'appui 80, les mesures de course et d'effort sont mémorisées dans une mémoire de données 96 décrite ultérieurement. La tête 64 est déplacée vers le haut pour libérer la pièce 12.

Une deuxième opération d'un procédé de mise en forme de la pièce 12 va maintenant être décrite. Ladite deuxième opération, dite opération de dévrillage, se déroule comme suit :
Comme dans l'opération de défléchage décrite ci-dessus, on considère initialement que le pied 20 est assemblé au logement 55 de l'organe 54, de sorte que les axes 16 et 56 soient confondus.

Tout d'abord, l'algorithme 82 détermine une ou des zones de la pièce 12 destinées à entrer en contact avec les doigts 74, 76 et lesdites positions sont déterminées en conséquence. L'algorithme 82 détermine ainsi : une position angulaire initiale de l'organe 54 par rapport à la structure correspondante de l'unité 32 de préhension ; une position selon X de ladite unité 32 de préhension ; une position selon Y de l'unité 38 de torsion ; et une position selon Z de la bride supérieure 70 et/ou de la bride inférieure 72 de ladite unité de torsion, par rapport à la structure correspondante. Lesdites positions sont configurées pour qu'une troisième zone de préhension de la pièce 12 soit maintenue entre les brides supérieure et inférieure, comme décrit ci-dessus. La troisième zone de préhension peut être toute section de la pale, ou le talon.

Sur la base des positions déterminées ci-dessus, les moyens de déplacement 52 sont actionnés par le module électronique 40 pour disposer les unités 32 de préhension et 38 de torsion aux emplacements correspondants sur le bâti 30 ; l'organe 54 est placé dans la position angulaire initiale correspondante ; puis la bride supérieure 70 et/ou la bride inférieure 72 est/sont déplacée(s) selon Z de manière à prendre en tenaille la troisième zone de préhension.

De préférence, l'effort exercé par les brides 70, 72 sur la pièce 12 est contrôlé par l'installation 10, notamment en fin de course.

Puis, l'organe 54 rotatif de préhension est mis en rotation autour du troisième axe 56 par rapport à la structure 50 de l'unité 32 de préhension. La pale 14 subit un couple de torsion et en conséquence une deuxième déformation, dite dévrillage. Le déplacement angulaire de l'organe 54 est mesuré par le capteur 58 de position angulaire ; et le couple de torsion exercé par l'organe 54, ainsi que sa direction horaire ou anti-horaire, sont mesurés par le capteur 59 de couple.

Lorsqu'un déplacement angulaire et/ou un couple souhaité, déterminé par le programme 82, est atteint, le déplacement angulaire de l'organe 54 est arrêté à une position angulaire finale. Les mesures de déplacement angulaire et de couple sont mémorisées dans la mémoire de données 96.

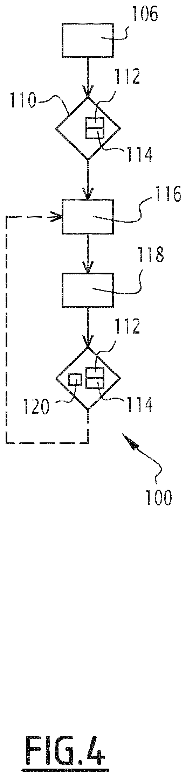

Les opérations de défléchage et de dévrillage décrites ci-dessus sont mises en oeuvre dans un procédé 100 pour la mise en forme de pièces 12 telles que décrites ci-dessus. Le procédé 100 est représenté sous forme de logigramme sur la figure 4.

Pour la mise en oeuvre du procédé 100, l'installation 10 décrite ci-dessus est incorporée à un ensemble 90, dans lequel ladite installation 10 est associée aux éléments suivants, représentés schématiquement sur la figure 1 : un dispositif d'imagerie 91 ; un automate 92 ; et un dispositif 94 de commande.

Le dispositif d'imagerie 91 est apte à acquérir des données représentatives de la pièce 12 en trois dimensions, et en particulier de la pale 14. Le dispositif d'imagerie 91 comprend notamment un lecteur 95 de données de traçabilité et d'identification bi-dimensionnelles.

Le dispositif d'imagerie 91 est par exemple une machine à mesurer avec contact, par exemple une machine à mesurer tridimensionnelle (MMT) ou un banc de mesure multi-cotes. Alternativement, le dispositif d'imagerie 91 peut être un équipement à mesurer sans contact comme un scanner tridimensionnel, ou un scanner mono-dimensionnel ou bidimensionnel, utilisé dans plusieurs directions vis-à-vis de la pièce.

L'automate 92, par exemple de type bras robot, est apte à déplacer la pièce 12 entre le dispositif d'imagerie 91 et l'installation 10, ainsi qu'à assembler et/à dissocier ladite pièce 12 et le logement 55 de l'unité 32 de préhension.

Le dispositif de commande 94 comprend une mémoire de données 96 et une mémoire de programmes 98. La mémoire de programmes 98 comprend autant d'algorithmes auto-apprenant que de définitions d'aubes. En alternative, la mémoire de programmes 98 comprend un algorithme 82 auto-apprenant et un jeu de paramètre pour chaque définition de pièce 12. Le dispositif de commande 94 peut être mis en oeuvre sous la forme d'un ordinateur, d'un système embarqué ou d'un automate de contrôle, ledit ordinateur, système ou automate comprenant la mémoire de données 96 et la mémoire de programmes 98. En variante, le dispositif de commande 94 est mis en oeuvre sous une forme dissociée dans laquelle la mémoire de données 96 est stockée sur un serveur déporté et la mémoire de programmes 98 est stockée dans un ordinateur, un système embarqué ou un automate, ou vice-versa, ou encore sous une forme entièrement déportée, dans laquelle la base de données et la mémoire de programmes 98 sont stockées chacune sur un serveur ou dans un nuage.

Le dispositif 94 de commande est relié au module électronique 40 de l'installation 10, au dispositif d'imagerie 91 et à l'automate 92.

De préférence, le dispositif d'imagerie 91, l'automate 92 et le module électronique 40 communiquent chacun avec le dispositif 94 de commande par une liaison sans fil. Le dispositif 94 de commande peut ainsi être déporté hors de l'ensemble 90, soit dans une salle de serveurs, soit dans un nuage. Quand le dispositif 94 de commande est un ordinateur ou un automate, le dispositif d'imagerie 91, l'automate 92 et le module électronique 40 communiquent chacun avec le dispositif 94 de commande de préférence par une liaison filaire.

Le procédé 100 pour la mise en forme de pièces 12 va maintenant être décrit. Ledit procédé 100 est mis en oeuvre par l'algorithme 82 auto-apprenant du dispositif 94 de commande.

Un lot de production est fourni, constitué de pièces 12 dans un état initial. Lesdites pièces 12 sont sensiblement identiques les unes aux autres et par exemple obtenues par forgeage.

Chacune des pièces 12 dudit lot de production comporte un identifiant, notamment un identifiant visuel 104 tel qu'un numéro de série, un code-barre unidimensionnel ou bidimensionnel, un dispositif RFID ou une combinaison de deux ou des trois types d'identifiant. L'identifiant visuel permet de rattacher chaque pièce 12 d'un lot de production à une définition nominale 112. Une définition nominale est notamment définie par une matière, un plan de définition défini par un ensemble de dimensions nominales, et un ensemble de tolérance associées, définissant par exemple les dimensions minimales et maximales admissibles dans les trois dimensions de l'aube. La définition nominale 112 peut par exemple être décrite au moyen d'informations discrètes représentatives de la géométrie de la pièce 12, comme par exemple un ensemble de dimensions dans une base orthonormée (X, Y, Z) d'une section de la pâle, par exemple définie à une distance axiale d'une surface du pied 20, un angle de vrillage autour de l'axe 16, par exemple défini à une distance axiale d'une surface du pied 20, une épaisseur d'un bord d'attaque de la pale, une épaisseur d'un bord de duite de la pale, une position d'un ou plusieurs points particuliers sur une surface extérieure de la pale, ou une combinaison de n'importe lesquelles de ces données.

L'identifiant visuel 104 permet également de rattacher chaque pièce 12 à un algorithme 82 auto-apprenant, comme cela sera décrit ultérieurement.

Chacune des pièces 12 du lot de production est soumise aux étapes suivantes :

Tout d'abord, une première acquisition tridimensionnelle 106 de la pièce 12, en particulier de la pale 14, est réalisée par le dispositif d'imagerie 91. La première acquisition tridimensionnelle génère un premier ensemble de données 114 représentatives de la géométrie de la pièce 12 dans la conformation initiale.

Selon un mode de réalisation, ce premier ensemble de données 114 comprend au moins les mêmes informations que celles de la définition nominale 112, ou seulement une partie desdites informations.

Selon un mode de réalisation, le dispositif d'imagerie 91 scanne l'identifiant 104 de la pièce 12. L'identifiant 104 est envoyé au dispositif 94 de commande, qui compare l'identifiant à un ensemble de définitions nominales stockées dans la mémoire de données 96.

La comparaison permet d'identifier la définition nominale 112 ainsi que ses caractéristiques de définition, correspondant à la pièce 12 fabriquée. La comparaison permet également d'identifier l'algorithme 82 auto-apprenant à utiliser, ledit algorithme étant associé à la définition nominale de la pièce 12.

Ensuite, chaque donnée du premier ensemble de données 114 est comparée (étape 110) aux données correspondantes de la définition nominale 112 de la pièce 12. L'identifiant de la pièce 12, ledit premier ensemble de données 114 et la conformité ou non-conformité de chaque donnée du premier ensemble 114 de données sont mémorisés dans la mémoire de données 96.

La comparaison permet de déterminer si la pièce 12 identifiée, dans l'état initial, est conforme au profil nominal de la pale.

Si au moins une donnée du premier ensemble de données 114 n'est pas conforme à la donnée correspondante de la définition nominale 112, par exemple un angle de vrillage mesuré à une distance particulière le long de l'axe est supérieur au maximum admissible de l'angle de définition à cette même distance, l'algorithme 82 effectue les opérations suivantes (étape 116) :
- détermination de l'opération de déformation/redressage la plus apte à déformer la pièce vers le profil souhaité, entre les opérations de défléchage et de dévrillage ; puis,
- si l'opération de défléchage est choisie, détermination de la position de la zone d'appui 80, et de l'effort ou la course à appliquer à la pièce 12 pour obtenir la déformation souhaitée ; ou
- si l'opération de dévrillage est choisie, détermination du déplacement angulaire ou du couple de torsion à appliquer à la pièce 12 pour obtenir la déformation souhaitée.

Ensuite (étape 118), l'automate 92 dispose la pièce 12 dans le logement 55 de l'installation 10 ; et l'opération définie à l'étape précédente par l'algorithme 82 est réalisée par ladite installation 10, comme décrit précédemment.

En particulier, dans le mode de réalisation considéré, les informations sur la zone d'appui 80, déterminées par l'algorithme 82, sont transmises au module électronique 40 de l'installation 10.

Ensuite, l'automate 92 transfère la pièce 12 dans le dispositif d'imagerie 91 ; et une deuxième acquisition tridimensionnelle de la pièce 12 dans un état déformé, en particulier de la pale 14, est réalisée, de sorte à générer un deuxième ensemble de données 120 représentatives de la géométrie de la pale 14 dans la conformation déformée.

Le deuxième ensemble de données 120 est comparée à la définition nominale 112 afin de de déterminer si la pièce 12 identifiée, dans l'état déformé, est conforme.

Les valeurs de position, d'angle, de course, de couple et/ou d'effort, mesurées par les capteurs 53, 58, 59, 66, 68, 79 au cours de l'opération de défléchage et / ou de dévrillage, ainsi que les caractères de conformité et non-conformité du deuxième ensemble de données sont mémorisés dans la mémoire de données 96 du dispositif 94 de commande, en association avec l'identifiant de la pièce 12.

Par un procédé d'apprentissage automatique, ces valeurs sont prises en compte dans l'algorithme 82 auto-apprenant, correspondant à l'étape 116 décrite ci-dessus, pour déterminer l'opération de déformation/redressage optimale à mettre en oeuvre sur chaque pièce 12 suivante du lot concerné, et pour chaque pièce 12 de chaque lot fabriqué selon le plan de définition d'une même pièce nominale.

Selon un mode de réalisation, si au moins une donnée du deuxième ensemble de données 120 n'entre pas dans l'intervalle de tolérance autour du profil nominal, c'est-à-dire si au moins une donnée est considérée comme non-conforme, la pièce 12 est soumise à une nouvelle itération des étapes 116 et 118 afin de lui faire subir une deuxième déformation si cela est nécessaire et autorisé sur la référence de la pièce.

De préférence, l'algorithme 82 limite les déformations de la pièce 12 à une seule opération de défléchage et une seule opération de dévrillage.

Selon un mode de réalisation, l'algorithme 82 est configuré pour mettre la pièce en conformité au juste nécessaire. Selon un autre mode de réalisation, le programme 82 est configuré pour tendre vers le profil nominal.

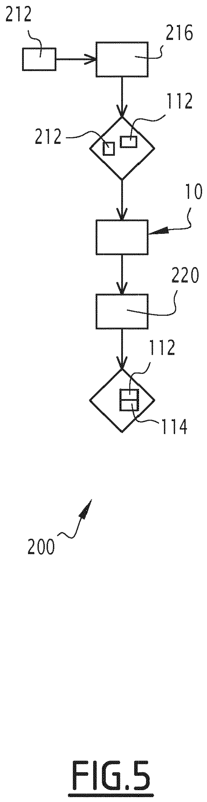

Selon un mode de réalisation, l'algorithme 82 auto-apprenant, mis en oeuvre à l'étape 116, est élaboré à l'issue d'une phase 200 d'apprentissage se déroulant comme suit (Fig. 5) :
Un lot-test de pièces 212, dans un état initial, est fourni. Les pièces 212 sont analogues aux pièces 12 du lot de production, décrites ci-dessus. Par exemple, chaque lot-test comprend au minimum cent pièces, et plus préférentiellement au moins quatre cents pièces. Chacune des pièces 212 du lot-test est soumise aux étapes suivantes :
L'identifiant 104 de la pièce 212, ainsi que la définition nominale 112 de ladite pièce sont mémorisés dans la mémoire de données 96 du dispositif 94 de commande.

Une première acquisition tridimensionnelle 216 de la pièce 212 est réalisée par le dispositif d'imagerie 91.

Ensuite, un opérateur compare un profil de la pièce 212 avec la définition nominale 112 décrite ci-dessus. Sur la base de cette comparaison, l'opérateur évalue une opération appropriée, choisie parmi les opérations de défléchage et de dévrillage décrites ci-dessus, à laquelle soumettre la pièce 212 considérée pour la déformer.

L'opérateur soumet ensuite ladite pièce 212 à l'opération appropriée à l'aide de l'installation 10, en contrôlant les unités 32 de préhension, 34 de support, 36 de flexion et 38 de torsion de ladite installation. Les données géométriques de la pale dans la conformation initiale, les positions, déplacements, efforts et couples précédemment décrits, mesurés par les capteurs de l'installation 10, ainsi que les caractères de conformité des données géométriques sont mémorisés (étape 218) dans la mémoire de données 96.

Ensuite, une deuxième acquisition tridimensionnelle 220 de la pièce 212 ainsi déformée est réalisée par le dispositif d'imagerie 91.

Les données géométriques de la pale déformée - générée par la deuxième acquisition tridimensionnelle 220 - est comparée à la définition nominale 112 . La comparaison permet de déterminer si la pièce 212 identifiée a été déformée de manière à entrer dans l'intervalle de tolérance 114 autour du profil nominal de la pale.

Ces opérations sont répétées sur une pluralité de pièces 212 du lot-test. Une analyse de corrélation est réalisée entre les mesures géométriques de chaque pièce initiale et les mesures géométriques de chaque pièce déformée en comparaison au profil théorique, afin de déterminer les paramètres influents pour le redressage des aubes correspondant à une référence d'aube nominale. Ensuite, l'algorithme 82 auto-apprenant est élaboré, sur la base des paramètres influents déterminés par l'analyse de corrélation. L'algorithme 82 est ensuite mémorisé dans la mémoire de programmes 98.

Au cours de la mise en oeuvre du procédé 100 sur les pièces 12 du lot de production, les informations mémorisées dans la mémoire 96 permettent d'entrainer ledit algorithme par apprentissage automatique, comme indiqué ci-dessus, afin d'améliorer les préconisations de valeurs de couple/angle et d'effort/course à impartir à chaque pièce 12 pour la rendre conforme, avec une probabilité suffisante, au profil nominal géométrique.

Selon un autre mode de réalisation, la phase d'apprentissage 200 peut être réalisée sans intervention humaine, l'algorithme 82 auto-apprenant pouvant suivre un plan d'expérience prédéfini, ou un plan d'expérience dont les limites sont prédéfinies, l'algorithme bâtissant le plan à l'intérieur de ces limites.

## Revendications

1. Procédé (100) de mise en forme d'une pièce d'équipement (12) de type aube de turbine ou de compresseur, le procédé de mise en forme comprenant les étapes suivantes :
- fourniture d'une pièce (12) comprenant une pale (14) dans une conformation initiale, ladite pale s'étendant selon un axe (16), et comprenant au moins une première zone de préhension (20) disposée à une extrémité axiale de la pale ;
- fourniture d'une définition nominale (112) représentant la pièce dans une conformation nominale, ladite définition nominale comprenant un ensemble de dimensions nominales et de tolérances associées ;
- acquisition tridimensionnelle (106) d'un premier ensemble de données (114) représentant la pièce dans la conformation initiale ;
- comparaison du premier ensemble de données (114) à la définition nominale (112) afin de déterminer un caractère conforme ou non-conforme d'au moins une donnée du premier ensemble de données (114);
- pour une donnée non-conforme, détermination par un algorithme (82) auto-apprenant entraîné sur une pluralité de pièces de même type d'un effort à appliquer sur la pièce pour déformer ladite pièce avec une probabilité suffisante pour qu'au moins la donnée non-conforme soit déterminée ultérieurement comme étant conforme;
- application de l'effort déterminé à l'étape précédente sur la pièce (12) de sorte à obtenir la pièce dans une conformation déformée,
- acquisition tridimensionnelle d'un deuxième ensemble de données (120) de la pièce dans la conformation déformée, ;
- comparaison du deuxième ensemble de données (120) à la définition nominale (112) afin de déterminer un caractère conforme ou non-conforme d'au moins une donnée du deuxième ensemble de données (120) ;
- mesure et enregistrement de paramètres de l'effort appliqué, des premier (114) et deuxième (120) ensembles de données ainsi que des caractères de conformité et de non-conformité déterminés lors des étapes de comparaison ; et
- entraînement de l'algorithme (82) auto-apprenant sur la base des mesures et enregistrements de l'étape précédente.

2. Procédé selon la revendication 1, dans lequel l'effort est choisi entre : un effort en flexion, perpendiculairement à l'axe (16) de la pale (14); un couple de torsion autour dudit axe (16) de pale (14) ; et un effort combiné de flexion et de torsion.

3. Procédé selon la revendication 1 ou la revendication 2, dans lequel au moins une acquisition tridimensionnelle (116) est réalisée au moyen d'un équipement à mesurer avec ou sans contact.

4. Procédé selon la revendication 3, dans lequel chacun de la définition nominale (112), du premier (114) et du deuxième (120) ensemble de données comprend au moins une donnée parmi : un ensemble de dimensions d'une section de la pâle, un angle de vrillage, une épaisseur d'un bord d'attaque de la pale, une épaisseur d'un bord de fuite de la pale, une position d'un point clé sur une surface extérieure de la pièce, ou une combinaison de n'importe lesquelles de ces données.

5. Procédé selon la revendication 1 ou la revendication 2, dans lequel, au cours de l'application de l'effort sur la pale, une préhension est exercée au moins sur la première zone de préhension (20).

6. Procédé selon la revendication 1 dans lequel, au cours de l'application de l'effort sur la pale, une deuxième (22) zone de préhension de la pièce (12) est maintenue fixe par rapport à un bâti (30) ;

7. Procédé selon la revendication 6 dans lequel l'effort est un effort en flexion, perpendiculairement à l'axe (16) de la pale (14) ; ledit effort en flexion étant appliqué en exerçant un appui sur une zone d'appui (80) de la pale, ladite zone d'appui étant disposée entre la première (20) et la deuxième (22) zone de préhension de ladite pièce.

8. Procédé selon la revendication 6 dans lequel : l'effort est un couple de torsion autour de l'axe (16) de pale (14) ; l'un des éléments de préhension et de la deuxième portion de la pièce est maintenu fixe par rapport à un bâti (30) ; et l'effort de torsion est appliqué en faisant pivoter, par rapport au bâti, l'autre desdits premières et deuxième zone de préhension.

9. Procédé selon la revendication 6 dans lequel : l'effort est un couple de torsion autour de l'axe (16) de pale (14) ; et l'effort de torsion est appliqué en faisant pivoter, l'un par rapport à l'autre, la première (20) et la deuxième (22) zones de préhension.

10. Procédé selon la revendication 1 dans lequel la pièce comprend en outre un identifiant (104), le procédé comprenant en outre les étapes de : lecture de l'identifiant ; identification de la définition nominale (112) correspondant à la pièce d'équipement (12) parmi une pluralité de définitions nominales ; et identification de l'algorithme (82) auto-apprenant correspondant à la pièce d'équipement (20) parmi une pluralité d'algorithmes auto-apprenants.

11. Ensemble (90) pour la mise en oeuvre d'un procédé selon l'une des revendications précédentes, comprenant :
- un dispositif de mesure (91), apte à acquérir des données tridimensionnelles de la pièce (12), dans la conformation initiale et/ou dans la conformation déformée ;
- une installation (10) apte à appliquer l'effort sur la pièce (12); et
- un dispositif électronique (94) comprenant une mémoire de données (96) et au moins un algorithme (82) auto-apprenant entraîné sur une pluralité de pièces de même type que la pièce (12), ledit dispositif de mesure (91), l'installation (10) et le dispositif électronique (94) étant reliés par au moins un canal de communication.
